# EUROPEAN PATENT SPECIFICATION

(11) **EP 4 671 127 B1**
(45) Date of publication and mention of the grant of the patent: **28.10.2026**
(21) Application number: 24184976.9
(22) Date of filing: 27.06.2024
(51) Int. Cl.: B64C 25/60, F16F 9/06, F16F 9/43

(54) **AIRCRAFT LANDING GEAR SHOCK ABSORBER STRUT**
STOSSDÄMPFERSTREBE FÜR FLUGZEUGFAHRWERK
JAMBE D'AMORTISSEUR DE CHOCS DE TRAIN D'ATTERRISSAGE D'AÉRONEF

(43) Date of publication of application: 31.12.2025
(73) Proprietor: Safran Landing Systems UK Ltd, Gloucester, Gloucestershire GL2 9QH (GB)
(72) Inventor: BENNETT, Ian Robert, Gloucester, GL2 9QH (GB)
(74) Representative: Latham, Stuart Alexander

(56) References cited:
- GB-A- 1 312 380
- US-A- 2 107 494
- US-A1- 2023 038 683
- US-B2- 9 914 532

## Description

### Background

It is known for an aircraft landing gear assembly to comprise a main load bearing, shock absorber strut for absorbing landing and taxiing loads and supporting the weight of an aircraft when on the ground.

It is known for such shock absorber struts to be "oleo-pneumatic", containing a hydraulic liquid such as a mineral or synthetic oil for damping and a gas such as nitrogen for spring function.

One type of oleo-pneumatic shock absorber is referred to as "unseparated" or 'wet' and comprises a chamber containing a liquid and a gas in fluid communication with one another and not separated by a movable barrier such as a separator piston.

The internal volume of the shock absorber contains both liquid and gas. For the shock absorber to function correctly it is necessary for the correct mass of gas and volume of liquid to be contained. The gas is normally determined by filling the shock absorber of known volume with liquid to a certain level so that it contains a known volume of gas, and then subsequently pressurizing the gas to a set pressure which may be varied slightly depending upon the ambient temperature.

The present inventor has noted that the fill procedure for an unseparated oleo-pneumatic shock absorber can be improved to increase the likelihood of the correct quantity of gas and liquid being introduced into the shock absorber.

GB1312380A describes a shock absorber comprising a cylinder 5 separated into two chambers by a valved piston 7, one chamber containing liquid and the other containing liquid and gas in direct contact, a closable filling tube 4 extends into the latter chamber, which functions as a reservoir to accommodate piston rod volume changes.

US2107494A describes a shock absorbent strut for aircraft.

US2023038683A1 describes an encapsulated shock absorber of an aircraft undercarriage includes a sliding rod slidably mounted in a leg strut of the undercarriage and an inner cylinder extending inside the strut.

US9914532B2 describes an aircraft landing gear shock absorber having an inner housing portion slidably coupled within an outer housing portion, and a chamber which defines a sealed fluid volume for containing shock absorber fluid within the shock absorber.

### Summary

In accordance with a first aspect of the present invention there is provided an aircraft landing gear shock absorber strut comprising an unseparated oleo-pneumatic shock absorber comprising:
an outer cylinder defining a chamber;
an inner cylinder slidably coupled to the outer cylinder;
a fluid insertion pipe which extends into the chamber for introducing hydraulic liquid and gas into the chamber; and
a valve for closing fluid insertion pipe to retain hydraulic liquid and gas within the chamber,
wherein the fluid insertion pipe comprises an axially extendable tube and a temperature dependent actuator arranged to change the axial length of the tube based on the temperature within the chamber, wherein the actuator is arranged to shorten the tube when the temperature within the chamber increases, and the actuator is arranged to lengthen the tube when the temperature within the chamber decreases.

Thus, the present inventor has devised a new type of aircraft landing gear shock absorber strut which can increase the likelihood of a correct quantity of liquid and gas being introduced when filling the shock absorber, both initially and during servicing. The provision of the variable length tube and temperature dependent actuator provide a stack pipe length (and hence gas fill volume) that varies according to temperature such that the correct gas fill volume can be reached independent of temperature.

The actuator can comprise one or more bi-metallic elements, each bi-metallic element comprising a first layer of metal having a first coefficient of thermal expansion and a second layer of metal having a second coefficient of thermal expansion which is different to the first coefficient of thermal expansion, wherein the first and second layers of metal are arranged in parallel.

One end of the bi-metallic element can be fixed in helix angle or pitch relative to its end attachment, while the other end is able to alter in pitch relative to its end attachment. One or both end attachments may be free to rotate around the tube axis.

The, or each, bi-metallic element can be arranged to extend the tube between 0.1mm/°C and 1.6mm/°C, in some embodiments between 0.2mm/°C and 0.8mm/°C.

The first layer can comprise steel and the second layer can comprise brass.

The tube can be distinct from the actuator.

The tube can be elastically deformable, and the actuator can be disposed around the tube.

The tube can be formed as a bellows.

The tube can include an outwardly projecting radial flange and the actuator can have a first end coupled to an inner axial face of the outer cylinder and a second end coupled to the radial flange.

The actuator can comprise one or more helical strips.

The actuator can comprise a plurality of helical strips arranged in an equiangular arrangement around the tube.

The tube can comprise an inner tube coupled to an inner axial face of the outer cylinder and an outer tube slidably coupled to the inner tube for axial movement relative to the inner tube and the actuator is arranged to move the outer tube to lengthen and shorten the tube.

The inner tube can include an outwardly facing threaded portion and the actuator further comprises a rotatable collar with an inwardly facing threaded portion arranged in union with the outwardly facing threaded portion, the collar being mechanically coupled to the outer tube by an inwardly extending radial flange which is received within a circumferential groove on the outer sidewall of the outer tube to permit relative rotation between the collar and outer tube but inhibit relative axial movement between the collar and outer tube, wherein the actuator further comprises a spiral strip disposed around the collar and having an end coupled to the collar and an end coupled to an inner surface of the outer cylinder such that contraction or expansion of the spiral due to a change in temperature causes rotation of the collar to move the outer tube to lengthen or shorten the tube.

The actuator can comprise a plurality of strip members arranged in parallel, each strip member having one end coupled to the outer tube and another end coupled to an inner surface of the outer cylinder.

The actuator can comprise a plurality of discs arranged in a series stack, each disc including a central aperture within which the tube is disposed, the disc stack being coupled at one end to an inner face axial face of the outer cylinder and coupled at the other end to the outer tube; or wherein the actuator comprises a plurality of wave shaped springs arranged in a series stack defining a ring within which the tube is disposed, the ring being coupled at one end to an inner face axial face of the outer cylinder and coupled at the other end to the outer tube.

According to a second aspect of the present invention, there is provided an aircraft landing gear assembly comprising:
a bearing for coupling the landing gear assembly to an aircraft;
a ground contacting assembly; and
the shock absorber strut according to the first aspect coupled to the bearing and the ground contacting assembly such that, with the ground contacting assembly in contact with the ground, the strut supports the weight of the aircraft.

According to a third aspect of the present invention, aircraft including one or more aircraft landing gear assemblies according to the second aspect.

### Brief Description of the Drawings

By way of example only, certain embodiments of the invention will now be described by reference to the accompanying drawings, in which:
Figure 1 is a diagram of an aircraft;
Figures 2 and 3 are diagrams of a known aircraft landing gear assembly;
Figures 4 to 9 are diagrams of a known aircraft landing gear shock absorber strut illustrating how temperature can affect the quantity of hydraulic liquid within the shock absorber;
Figure 10 is an aircraft landing gear shock absorber strut according to an embodiment of the invention;
Figures 11a and 11b are diagrams of a deformable tube stack pipe arrangement which can be used with the shock absorber strut of Figure 10;
Figure 12 is a diagram of an alternative actuator arrangement which can be used with the deformable tube stack pipe arrangement of Figures 11a and 11b;
Figure 13 is a diagram of a sliding tube stack pipe arrangement which can be used with the shock absorber strut of Figure 10;
Figure 14 is a diagram of an alternative actuator arrangement which can be used with the sliding tube stack pipe arrangement of Figure 13;
Figure 15 is a diagram of an alternative actuator arrangement which can be used with the sliding tube stack pipe arrangement of Figure 13;
Figure 16 is a diagram of an alternative actuator arrangement which can be used with the sliding tube stack pipe arrangement of Figure 13; and
Figure 17 is a diagram of an alternative actuator arrangement which can be used with the sliding tube stack pipe arrangement of Figure 13.

### Detailed Description

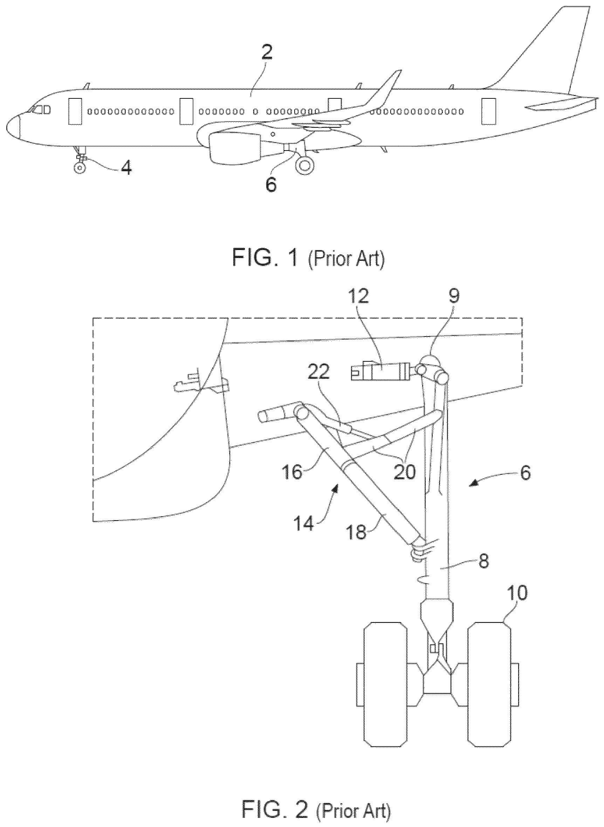

Figure 1 is a diagram of an aircraft 2. The aircraft includes assemblies such as a nose landing gear 4 and a pair of main landing gear 6. The landing gear 4, 6 each includes a shock absorber strut for damping landing loads and supporting the weight of the aircraft 2 when it is on the ground. The term aircraft as used herein can include aeroplanes, helicopters and the like having mass in excess of 450Kg.

Figure 2 is an example of an aircraft landing gear assembly 6 which can include a shock absorber strut according to an embodiment of the invention. It will however be appreciated that shock absorber struts according to embodiments of the invention can be used in a range of types of aircraft landing gear including main landing gear and nose landing gear, with one more axles and include wheels or other ground contacting means.

The aircraft landing gear assembly 6 is movable between a deployed condition, for take-off and landing, and a stowed condition for flight. The landing gear assembly includes a main shock absorber strut 8, comprising an outer cylinder and a sliding tube, a foldable stay 14, and a lock link 20. An upper end of the strut 8 is provided with a bearing 9 via which the strut 8 is pivotally coupled to the airframe of the aircraft 2. A lower end of the strut 8 is provided with a wheel and brake assembly 30. A retraction actuator 12 is provided for moving the landing gear between the deployed condition and the stowed condition. The retraction actuator can have one end coupled to the airframe 11 and another end coupled to the strut 8.

The stay 16 serves to support the orientation of the strut 8 when the landing gear is in the deployed condition. The stay 18 generally includes a two-bar linkage 16, 18 that can be unfolded to assume a generally straight or aligned, over centre condition in which the stay 18 is locked to inhibit movement of the outer cylinder, as shown in Figures 2. When the stay is broken, it no longer inhibits pivotal movement of the strut 8 about the mounting bearing and strut 8 can be moved by the retraction actuator 12 towards the stowed condition.

The lock link 20 has an elongate upper link arm having a lower end pivotally coupled to an upper end of an elongate lower link arm via a pivot pin. The link arms can therefore pivotally move relative to one another about the pivot pin. The lock link is pivotally coupled to the strut 8 and one of the stay arms 16. When the lock link 20 is in the locked condition, as illustrated in Figure 2, the upper and lower link arms are generally longitudinally aligned or coaxial, and can be 'over-centre', such that the lock link 20 is arranged to oppose a force attempting to break or fold the stay 14. The lock link 20 must be broken to enable the stay 14 to be broken and folded, thereby permitting the strut 6 to be moved by the retraction actuator 12 towards the stowed condition.

The down lock assist in moving the landing gear assembly to the deployed condition and locking it in that state by making the lock link 20. Down lock springs also inhibit the lock link 20 accidentally being broken/unlocked.

A lock stay actuator 22 is coupled between the stay 14 and lock link 20 and arranged to pivotally move the link arms so as to make and break the lock link 20. The lock stay actuator 22 can break the lock link 20 against the down lock spring bias, allowing the landing gear assembly to be folded and stowed as described previously.

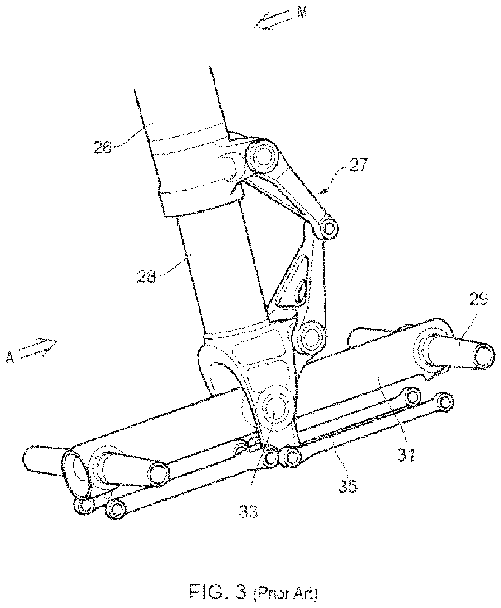

Referring additionally to Figure 3, the outer cylinder 26 and sliding tube 28 of the strut 8 can be coupled via a set of torque links 27 which permit relative axial movement but inhibit relative rotational movement between the outer cylinder 26 and sliding tube 28.

Wheel and brake assemblies 10 can be mounted on axles 29 which in turn are mounted at end regions of a bogie beam 31. The bogie beam 31 is pivotally coupled near its centre to the sliding tube 28 via a bogie pivot pin 33. Brake rods 35 can be provided to anchor the brake packs to the sliding tube 28 to react brake torque.

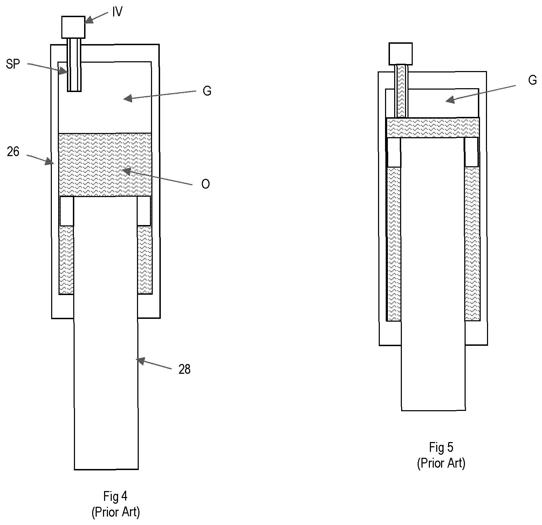

Referring to Figures 4 and 5, oleo-pneumatic unseparated or "wet" shock absorbers comprise a chamber filled with both fluid (typically a mineral or synthetic oil) and a gas (typically dry nitrogen). In order for the shock absorber to function correctly it is necessary for the correct mass of gas and volume of oil to be contained. The gas is normally determined by filling the shock absorber so that it contains a known volume of gas, and then subsequently pressurizing the gas to a set pressure which may be varied slightly depending upon the ambient temperature.

A common method of setting the fill gas volume of an unseparated oleo-pneumatic shock absorber is to use a stack pipe SP in the design. The stack pipe SP defines a tubular inflation port which extends into the chamber of the shock absorber. The shock absorber is partially filled with oil O and then closed while in an upright position, with the inflation valve IV open. The oil O level rises, with air expelled from the inflation port until the oil level reaches the bottom of the stack pipe, as illustrated in Figure 5. Further closure results in only oil being expelled from the stack pipe SP, leaving a set volume of gas G trapped within the top of the shock absorber chamber. Closure of the inflation valve IV will result in the set mass of gas G remaining within the shock absorber.

In subsequent service the shock absorber will be periodically checked for correct inflation, in case of any leaks of gas or oil. The gas pressure is checked or set according to a chart relating to leg closure and temperature.

Whilst existing procedures are generally satisfactory the present inventor has noted that a small error could occur in the fill procedure due to thermal expansion or contraction of the oil.

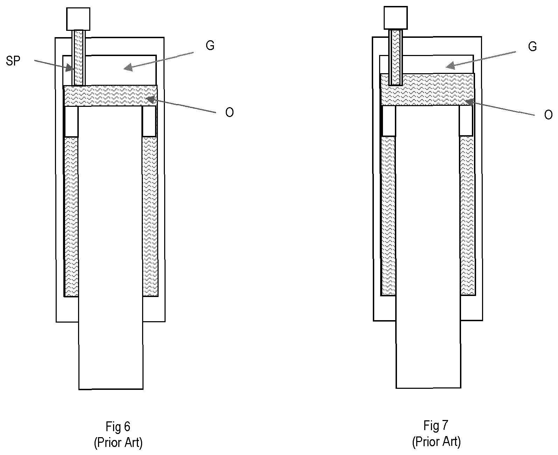

Referring additionally to Figures 6 and 7, if the shock absorber is filled when colder than nominal conditions, as illustrated in Figure 6, the oil will have contracted slightly, resulting in a slightly greater mass of oil O being used to fill to the stack pipe level during the filling procedure. If the temperature rises to nominal after filling, as illustrated in Figure 7, then the oil O will expand and compress the gas G a little more than expected for any given closure.

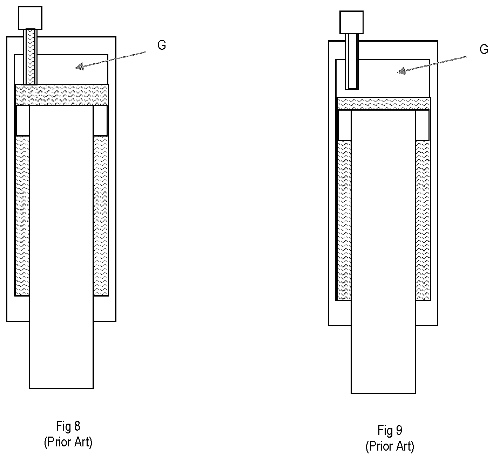

Similarly, the gas G would be compressed a little less than expected if the shock absorber were filled when above nominal temperature, as illustrated in Figures 8 and 9.

The present inventor has devised a new type of aircraft landing gear shock absorber strut which can increase the likelihood of a correct quantity of liquid and gas being introduced when filling the shock absorber, both initially and during servicing. Gas pressure is set and corrected according to temperature (and closure according to a chart) but this assumes that the initial gas and oil volumes are correct. The difference between true filling temperature and assumed filling temperature can produce an error (offset) between the assumed pressure - temperature - closure curves and the true ones. Hence there is a benefit in providing a means to ensure that masses are correct regardless of actual fill temperature.

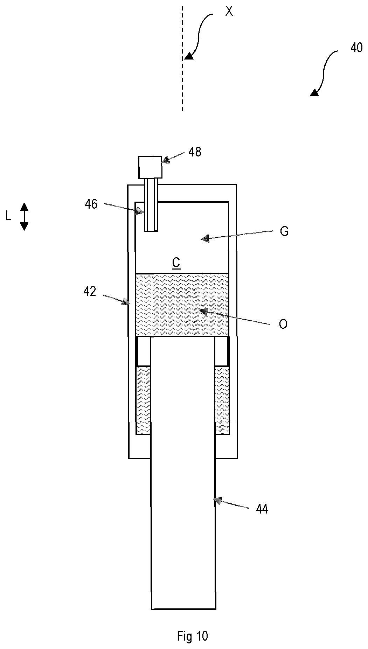

Referring to Figure 10, an aircraft landing gear assembly shock absorber strut according to an embodiment of the invention is shown generally at 40. In this embodiment the shock absorber strut 40 defines the main structural load bearing assembly of the landing gear, with an outer cylinder 42 of the shock absorber strut 40 defining the main fitting for pivotally coupling to an airframe via a main hinge (not shown). An inner cylinder 44 is slidably mounted within the outer cylinder 42 for linear movement along axis X between extended and compressed conditions. The outer cylinder 42 is hollow to define a variable volume chamber C containing a liquid O and a gas G. The chamber C is sealed in a conventional manner by dynamic seals (not shown). A lower end of the inner cylinder 44 is provided with a ground contacting assembly coupling for coupling to a wheel assembly, bogie beam or the like (not shown).

In the following description the liquid O is oil and the gas G is nitrogen, but other liquids and gasses can be used.

A tubular stack pipe 46 extends into the chamber C through an upper axial face of the outer cylinder 46 by a length L and is provided with an external inflation valve 48 for opening and closing the inflation port of the stack pipe 46.

Embodiments of the invention provide a stack pipe or tube 46 which has a length L (and hence oil fill volume) that varies according to temperature such that the correct oil fill mass can be reached independent of temperature. The stack pipe 46 is arranged to lengthen or shorten as a response to temperature. The gas fill pressure is determined according to a chart referencing temperature. The chart may be arranged to allow for the change in oil level and thus gas volume when filling. Thus, the shock absorber of known volume will be filled with the correct mass of oil and gas regardless of temperature when filling.

The oil to fill the shock absorber can be stored at the same or a similar ambient temperature to the shock absorber and hence the oil and the shock absorber are at about the same temperature; for example, due to the oil being stored in the same hangar space as the shock absorber.

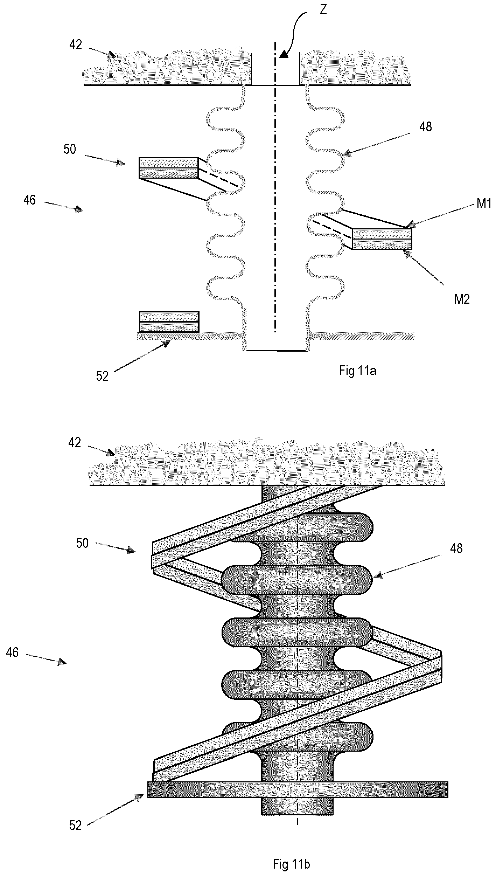

Referring to Figures 11a and 11b, the stack pipe 46 according to one embodiment is shown in more detail. The stack pipe 46 comprises an elastically deformable, low-stiffness bellows tube 48 which can lengthen and shorten along the tube axis Z. The tube can for example be formed from a plastics material.

An actuator 50 is provided to lengthen and shorten the tube 48 in accordance with temperature within the chamber C. In this embodiment, the actuator 50 is a single bi-metallic helical strip 50 positioned around the tube and having one end in contact with an inner surface of the top axial inner face of the outer cylinder 42 and a second end in contact with a radial flange 52 provided at the inner end of the bellows tube 48. The ends of the helical bi-metallic strip 50 can be coupled to the cylinder 42 and flange 52 by any suitable means, such as welding, brazing, riveting, looping around a pin, or using resilient adhesive. The flange 52 may be arranged to freely rotate about bellows tube 48. In some embodiments, one end of the helical strip 50 is coupled in a fixed (encastre) arrangement while the other end is able to rotate against its abutment. The rotation can for example be obtained simply by flexure of a section (e.g. a thinned or resilient element).

The helical bi-metallic strip 50 can be formed from any pair of materials M1, M2 with a difference in coefficient of thermal expansion, such as steel and copper or yellow brass; however, other materials, such as invar (FeNi36) in place of steel can be used for example.

The two individual layers of the bi-metallic strip can be coupled to one another by fusing (including sintering), welding, brazing, adhesive or by rivets.

As the temperature within the chamber C increases, the helical bi-metallic strip 50 decreases the length L of the stack pipe 46 to permit a greater volume of oil O to be introduced into the chamber before the oil level reaches the stack pipe 46. If the shock absorber 40 is to be filled in an environment with high ambient temperature, then the oil will have expanded slightly (and be a lower density) compared with, say, the nominal 20°C environment. The stack pipe 46 is therefore arranged to contract in length L with increasing temperature such that when the shock absorber is filled it will take a larger volume of oil, but similar mass to that expected at nominal (say 20°C) temperature. When filled with gas G, the gas pressure can also be compensated for temperature in a conventional manner such that both volume and pressure are correct at the nominal (20°C) condition.

Similarly, as the temperature within the chamber C decreases, the helical bi-metallic strip 50 increases the length L of the stack pipe 46 to permit a smaller volume of oil O to be introduced into the chamber before the oil level reaches the stack pipe 46.

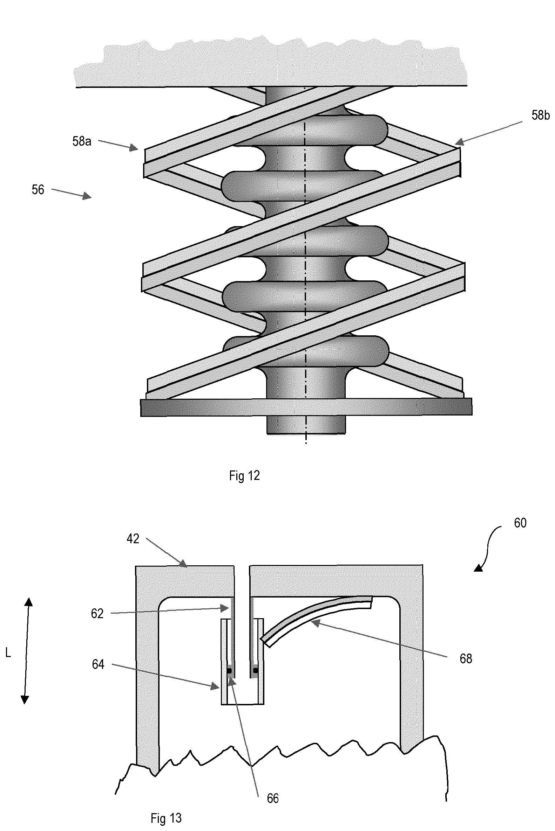

Referring to Figure 12, a stack pipe 56 according to another embodiment is shown. In this embodiment the stack pipe 56 has the same tube arrangement as the embodiment of Figures 11a and 11b, and includes an actuator having a first helical bi-metallic strip 58a and a second helical bi-metallic strip 58 arranged in a rotationally symmetrical, interleaved manner around the stack pipe 56.

In other embodiments, the stack pipe can have three or four or any plurality of helical bi-metallic strips arranged in a rotationally symmetrical, interleaved manner around the tube.

In one example, the helical bi-metallic strip 50 can comprise steel and yellow brass and the bellows tube 48 can comprise Bellows (copper alloy) OD10, ID6, 28 convolutions, 31 corrugated length, 2MPa max pressure, 8mm max deflection, rate 3 N/mm. With an expected 'hangar' temperature range of ± 10°C a required expansion can be typically between 0.2 - 0.8 mm/°C depending upon shock absorber size, a specific example being 0.6 mm/°C for a shock absorber suitable for a large civil aircraft having 360 mm diameter and a length of around 750 mm. In the case of the specific example, the bellows tube 48 requires 1.8N / °C from the helical bi-metallic strip 50. The helical bi-metallic strip 50 can be 25 mm wide, 4 mm total thickness, 450mm mean length, but wound in a helix, which results in approximately 0.7 mm deflection °C and 0.48 N °C. As such, a quadruple helix would be suitable in this example, giving 1.92 N/ °C total. With a mean coil diameter of 50 mm (so 25 mm ID and 75 mm OD) then the coil has a 157 mm circumference or 2.87 turns for 450 coil length.

In other embodiments, the stack pipe can for example comprise longer bellows, a tube of lower stiffness, different bi-metallic materials and/or bellows materials and different strip proportions.

Referring now to Figure 13, part of an aircraft landing gear assembly shock absorber strut according to another embodiment of the invention is shown generally at 60. The shock absorber strut 60 of this embodiment is similar to the embodiment of Figure 10 and as such, for brevity, the following description will focus on the differences.

In the illustrated embodiment, the stack pipe is formed from a rigid inner tube 62 coupled to the outer cylinder 42 and defining the inflation port which is in fluid communication with the external valve (not shown). A rigid outer tube 64 is slidably coupled to the inner tube 62 with a seal arrangement 66 between them such that the position of the outer tube 64 relative to the inner tube 62 defines the length L of the stack pipe.

The actuator 68 is defined by a bi-metallic strip 68 having one end coupled to the inner surface of the top axial inner face of the outer cylinder 42 and a second end in contact with the outer tube 64.

As such, changes in temperature cause the outer tube 64 to move towards or away from the top axial inner face of the outer cylinder 42 to vary the length L of the stack pipe in the manner described above with reference to Figures 11a and 11b.

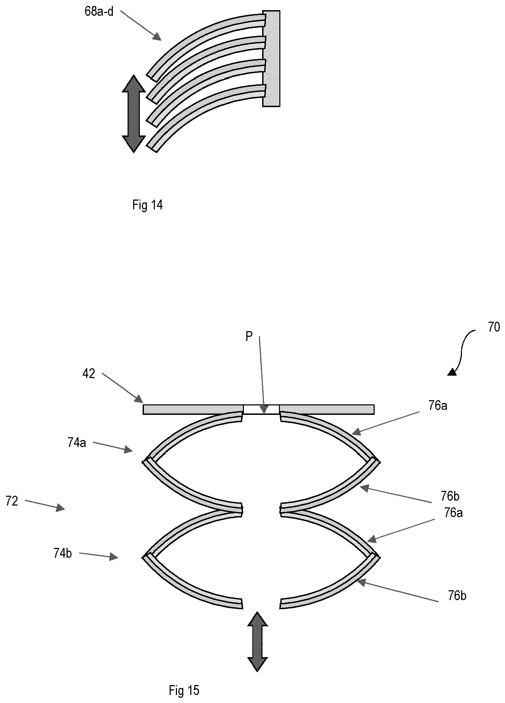

Referring additionally to Figure 14, in other embodiments the actuator can comprise a plurality of bi-metallic strips 68a-d arranged in parallel, each coupled to a common mounting formation such as an upper portion of the inner sidewall of the outer cylinder 42, or a mounting member extending down from the top axial inner face of the outer cylinder 42, and each coupled to the outer tube 64.

Referring now to Figure 15, part of an aircraft landing gear assembly shock absorber strut according to another embodiment of the invention is shown generally at 70. The shock absorber strut 70 of this embodiment is similar to that of Figure 13 and as such, for brevity, the following description will focus on the differences.

In this embodiment, the actuator is defined by bi-metallic discs 74a, 74b coupled to one another and stacked in series. Each disc has a central port P to receive the inner and outer tubes 62, 64. The uppermost disc 74a is coupled to the top axial inner face of the outer cylinder 42 and the lowermost disc is coupled to the outer tube 64.

Each disc 74a, 74b is formed from an upper half disc 76a coupled circumferentially to a lower half disc 76a. The order of the materials M1, M2 is the same for the upper and lower half discs 76a, 76b i.e. both have M1 on the outside and M2 on the inside of the disc.

In other embodiments, the discs can be formed from shape memory alloy, or bi-metallic, and arranged to undergo a binary change i.e. 'pop' at different temperatures, thus providing a stepped progression.

As such, changes in temperature cause the outer tube 64 to move towards or away from the top axial inner face of the outer cylinder 42 to vary the length L of the stack pipe in the manner described above with reference to Figures 11a and 11b.

In other embodiments, the discs can be circumferentially sealed to one another to define a fluid-tight passage through the stack, in which case the discs form the tube as well as the actuator.

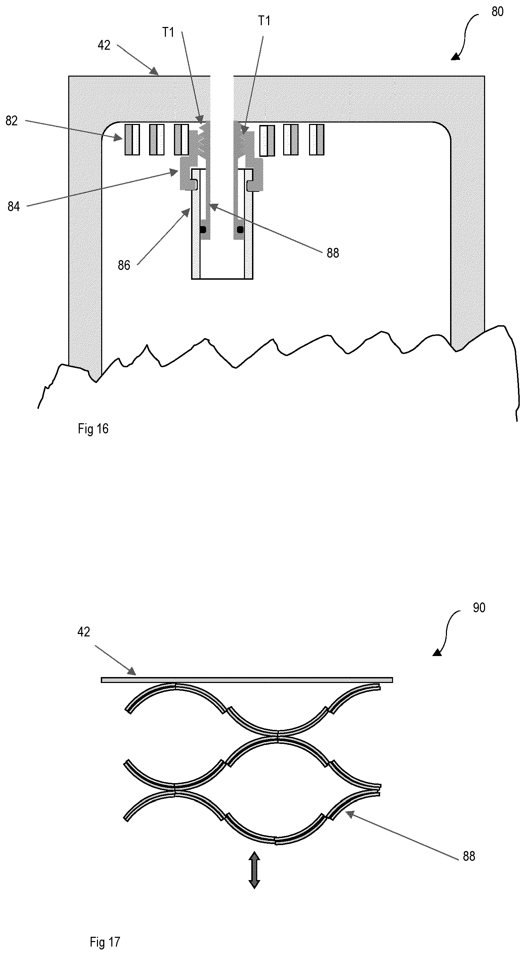

Referring now to Figure 16, part of an aircraft landing gear assembly shock absorber strut according to another embodiment of the invention is shown generally at 90. The shock absorber strut 80 of this embodiment is similar to that of Figure 16 and as such, for brevity, the following description will focus on the differences.

In this embodiment, the actuator is formed from a bi-metallic strip 82 formed into a spiral with a plurality of turns. One end of the spiral 82 is coupled to an inner surface of the outer cylinder 42 and the other end is coupled to a collar 84. The collar 84 is coupled to the outer tube 86 to permit relative rotation between them. For example, the collar can include a radial flange which extends towards and into an outer circumferential surface of the outer tube 86 to permit relative rotation between them but inhibit relative axial movement. The distal end of the collar 86 relative to the radial flange is provided with an inwardly facing threaded portion T1. The outer surface of the inner tube 88 proximate the top axial inner face of the outer cylinder 42 is provided with a corresponding and outwardly facing threaded portion T2 which mates with the threaded portion T1. As such, a temperature change causes the spiral bi-metallic strip 82 to wind, which rotates the collar 84 relative to the inner tube 88 and the threaded portions T1, T2 cooperate to axially move the collar and thus the outer tube 86.

As such, changes in temperature cause the outer tube 86 to move towards or away from the top axial inner face of the outer cylinder 42 to vary the length of the stack pipe in the manner described above with reference to Figures 11a and 11b.

Referring now to Figure 17, part of an aircraft landing gear assembly shock absorber strut according to another embodiment of the invention is shown generally at 80. The shock absorber strut 80 of this embodiment is similar to that of Figure 13 and as such, for brevity, the following description will focus on the differences.

In this embodiment, the actuator comprises a bi-metallic wave spring in which the illustrated pattern is repeated in a 360-degree ring and can be extended axially. The wave spring arrangement can have one end coupled to the top axial inner face of the outer cylinder 42 and the other end coupled to the outer tube (e.g. tube 86) to move the outer tube relative to the inner tube.

As such, changes in temperature cause the outer tube 86 to move towards or away from the top axial inner face of the outer cylinder 42 to vary the length of the stack pipe in the manner described above with reference to Figures 11a and 11b.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention can be implemented by means of hardware comprising several distinct elements. In a device claim enumerating several parts, several of these parts can be embodied by one and the same item of hardware.

## Claims

1. An aircraft landing gear shock absorber strut (40) comprising an unseparated oleo-pneumatic shock absorber comprising:
an outer cylinder (42) defining a chamber (C);
an inner cylinder (44) slidably coupled to the outer cylinder;
a fluid insertion pipe (46, 56) which extends into the chamber for introducing hydraulic liquid and gas into the chamber; and
a valve (48) for closing fluid insertion pipe to retain hydraulic liquid and gas within the chamber,
**characterised in that** the fluid insertion pipe (46) comprises an axially extendable tube and a temperature dependent actuator arranged to change the axial length of the tube based on the temperature within the chamber, wherein the actuator is arranged to shorten the tube when the temperature within the chamber increases and the actuator is arranged to lengthen the tube when the temperature within the chamber decreases.

2. The aircraft landing gear shock absorber strut according to claim 1, wherein the actuator comprises one or more bi-metallic elements, each bi-metallic element comprising a first layer of metal having a first coefficient of thermal expansion and a second layer of metal having a second coefficient of thermal expansion which is different to the first coefficient of thermal expansion, wherein the first and second layers of metal are arranged in parallel.

3. The aircraft landing gear shock absorber strut according to claim 2, wherein the, or each bi-metallic element is arranged to extend the tube between 0.1mm/°C and 1.6mm/°C.

4. The aircraft landing gear shock absorber strut according to claim 3, wherein the first layer comprises steel and the second layer comprises brass.

5. The aircraft landing gear shock absorber strut according to any preceding claim, wherein the tube is distinct from the actuator.

6. The aircraft landing gear shock absorber strut according to claim 5, wherein the tube is elastically deformable, and the actuator is disposed around the tube.

7. The aircraft landing gear shock absorber strut according to claim 6, wherein the tube includes an outwardly projecting radial flange and the actuator has a first end coupled to an inner axial face of the outer cylinder and a second end coupled to the radial flange.

8. The aircraft landing gear shock absorber strut according to any preceding claim, wherein the actuator comprises one or more helical strips.

9. The aircraft landing gear shock absorber strut according to claim 8, wherein the actuator comprises a plurality of helical strips arranged in an equiangular arrangement around the tube.

10. The aircraft landing gear shock absorber strut according to claim 5, wherein the tube comprises an inner tube coupled to an inner axial face of the outer cylinder and an outer tube slidably coupled to the inner tube for axial movement relative to the inner tube and the actuator is arranged to move the outer tube to lengthen and shorten the tube.

11. The aircraft landing gear shock absorber strut according to claim 10, wherein the inner tube includes an outwardly facing threaded portion and the actuator further comprises a rotatable collar with an inwardly facing threaded portion arranged in union with the outwardly facing threaded portion, the collar being mechanically coupled to the outer tube by an inwardly extending radial flange which is received within a circumferential groove on the outer sidewall of the outer tube to permit relative rotation between the collar and outer tube but inhibit relative axial movement between the collar and outer tube, wherein the actuator further comprises a spiral strip disposed around the collar and having an end coupled to the collar and an end coupled to an inner surface of the outer cylinder such that contraction or expansion of the spiral due to a change in temperature causes rotation of the collar to move the outer tube to lengthen or shorten the tube.

12. The aircraft landing gear shock absorber strut according to claim 10, wherein the actuator comprises a plurality of strip members arranged in parallel, each strip member having one end coupled to the outer tube and another end coupled to an inner surface of the outer cylinder.

13. The aircraft landing gear shock absorber strut according to claim 10, wherein the actuator comprises a plurality of discs arranged in a series stack, each disc including a central aperture within which the tube is disposed, the disc stack being coupled at one end to an inner face axial face of the outer cylinder and coupled at the other end to the outer tube; or wherein the actuator comprises a plurality of wave shaped springs arranged in a series stack defining a ring within which the tube is disposed, the ring being coupled at one end to an inner face axial face of the outer cylinder and coupled at the other end to the outer tube.

14. An aircraft landing gear assembly comprising:
a bearing for coupling the landing gear assembly to an aircraft;
a ground contacting assembly; and
the shock absorber strut according to any preceding claim coupled to the bearing and the ground contacting assembly such that, with the ground contacting assembly in contact with the ground, the strut supports the weight of the aircraft.

15. An aircraft including one or more aircraft landing gear assemblies according to claim 14.

## Patentansprüche

1. Flugzeugfahrwerk-Stoßdämpferstrebe (40), umfassend einen ungetrennten oleopneumatischen Stoßdämpfer, umfassend:
einen Außenzylinder (42), der eine Kammer (C) definiert;
einen Innenzylinder (44), der gleitfähig an den Außenzylinder gekoppelt ist;
ein Fluidzufuhrrohr (46, 56), das sich in die Kammer hinein zum Einleiten von Hydraulikflüssigkeit und Gas in die Kammer hinein erstreckt; und
ein Ventil (48) zum Schließen des Fluidzufuhrrohrs, um Hydraulikflüssigkeit und Gas innerhalb der Kammer zurückzuhalten,
**dadurch gekennzeichnet, dass** das Fluidzufuhrrohr (46) eine axial ausfahrbare Röhre und einen temperaturabhängigen Aktuator umfasst, der dazu angeordnet ist, die axiale Länge der Röhre basierend auf der Temperatur innerhalb der Kammer zu ändern, wobei der Aktuator dazu angeordnet ist, die Röhre zu verkürzen, wenn die Temperatur innerhalb der Kammer ansteigt, und der Aktuator dazu angeordnet ist, die Röhre zu verlängern, wenn die Temperatur innerhalb der Kammer sinkt.

2. Flugzeugfahrwerk-Stoßdämpferstrebe nach Anspruch 1, wobei der Aktuator ein oder mehrere Bimetallelemente umfasst, wobei jedes Bimetallelement eine erste Metallschicht, die einen ersten Wärmeausdehnungskoeffizienten aufweist, und eine zweite Metallschicht, die einen zweiten Wärmeausdehnungskoeffizienten aufweist, der sich von dem ersten Wärmeausdehnungskoeffizienten unterscheidet, umfasst, wobei die erste und die zweite Metallschicht parallel angeordnet sind.

3. Flugzeugfahrwerk-Stoßdämpferstrebe nach Anspruch 2, wobei das oder jedes Bimetallelement dazu angeordnet ist, die Röhre zwischen 0,1 mm/°C und 1,6 mm/°C zu verlängern.

4. Flugzeugfahrwerk-Stoßdämpferstrebe nach Anspruch 3, wobei die erste Schicht Stahl umfasst und die zweite Schicht Messing umfasst.

5. Flugzeugfahrwerk-Stoßdämpferstrebe nach einem vorstehenden Anspruch, wobei sich die Röhre von dem Aktuator unterscheidet.

6. Flugzeugfahrwerk-Stoßdämpferstrebe nach Anspruch 5, wobei die Röhre elastisch verformbar ist und der Aktuator um die Röhre herum angeordnet ist.

7. Flugzeugfahrwerk-Stoßdämpferstrebe nach Anspruch 6, wobei die Röhre einen nach außen hervorstehenden radialen Flansch einschließt und der Aktuator ein erstes Ende, das an eine innere axiale Fläche des Außenzylinders gekoppelt ist, und ein zweites Ende, das an den radialen Flansch gekoppelt ist, aufweist.

8. Flugzeugfahrwerk-Stoßdämpferstrebe nach einem vorstehenden Anspruch, wobei der Aktuator einen oder mehrere spiralförmige Streifen umfasst.

9. Flugzeugfahrwerk-Stoßdämpferstrebe nach Anspruch 8, wobei der Aktuator eine Vielzahl von spiralförmigen Streifen umfasst, die in einer gleichwinkligen Anordnung um die Röhre herum angeordnet sind.

10. Flugzeugfahrwerk-Stoßdämpferstrebe nach Anspruch 5, wobei die Röhre eine Innenröhre, die an eine innere axiale Fläche des Außenzylinders gekoppelt ist, und eine Außenröhre, die gleitfähig an die Innenröhre zur axialen Bewegung relativ zu der Innenröhre gekoppelt ist, umfasst, und wobei der Aktuator dazu angeordnet ist, das Außenröhre zu bewegen, um die Röhre zu verlängern und zu verkürzen.

11. Flugzeugfahrwerk-Stoßdämpferstrebe nach Anspruch 10, wobei die Innenröhre einen nach außen gewandten Gewindeabschnitt einschließt und der Aktuator weiter einen drehbaren Kragen mit einem nach innen gewandten Gewindeabschnitt umfasst, der im Eingriff mit dem nach außen gewandten Gewindeabschnitt angeordnet ist, wobei der Kragen mechanisch durch einen sich nach innen erstreckenden radialen Flansch an die Außenröhre gekoppelt ist, der innerhalb einer umlaufenden Nut an der Außenseitenwand der Außenröhre aufgenommen ist, um eine relative Drehung zwischen dem Kragen und der Außenröhre zu ermöglichen, aber eine relative axiale Bewegung zwischen dem Kragen und der Außenröhre zu verhindern, wobei der Aktuator weiter einen um den Kragen herum angeordneten Spiralstreifen umfasst, der ein Ende, das an den Kragen gekoppelt ist, und ein Ende, das an eine Innenfläche des Außenzylinders gekoppelt ist, aufweist, sodass eine Kontraktion oder Ausdehnung der Spirale aufgrund einer Temperaturänderung eine Drehung des Kragens bewirkt, um die Außenröhre zu bewegen, um die Röhre zu verlängern oder zu verkürzen.

12. Flugzeugfahrwerk-Stoßdämpferstrebe nach Anspruch 10, wobei der Aktuator eine Vielzahl von parallel angeordneten Streifenelementen umfasst, wobei jedes Streifenelement ein Ende, das an die Außenröhre gekoppelt ist, und ein anderes Ende, das an eine Innenfläche des Außenzylinders gekoppelt ist, aufweist.

13. Flugzeugfahrwerk-Stoßdämpferstrebe nach Anspruch 10, wobei der Aktuator eine Vielzahl von Scheiben umfasst, die in einem seriellen Stapel angeordnet sind, wobei jede Scheibe eine zentrale Öffnung einschließt, innerhalb der die Röhre angeordnet ist, wobei der Scheibenstapel an einem Ende an eine axiale Fläche der Innenfläche des Außenzylinders gekoppelt ist und an dem anderen Ende an die Außenröhre gekoppelt ist; oder wobei der Aktuator eine Vielzahl von wellenförmigen Federn umfasst, die in einem seriellen Stapel angeordnet sind, der einen Ring definiert, innerhalb dessen die Röhre angeordnet ist, wobei der Ring an einem Ende an eine axiale Fläche der Innenfläche des Außenzylinders gekoppelt ist und an dem anderen Ende an die Außenröhre gekoppelt ist.

14. Flugzeugfahrwerkbaugruppe, umfassend:
ein Lager zum Koppeln der Fahrgestellbaugruppe an ein Flugzeug;
eine bodenkontaktierende Baugruppe; und
die Stoßdämpferstrebe nach einem vorstehenden Anspruch, die derart an das Lager und die bodenkontaktierende Baugruppe gekoppelt ist, dass die Strebe das Gewicht des Flugzeugs trägt, wenn die bodenkontaktierende Baugruppe in Kontakt mit dem Boden steht.

15. Flugzeug, das eine oder mehrere Flugzeugfahrwerkbaugruppen nach Anspruch 14 einschließt.

## Revendications

1. Jambe (40) d'amortisseur de chocs de train d'atterrissage d'aéronef comprenant un amortisseur de chocs oléopneumatique non séparé comprenant :
un cylindre externe (42) définissant une chambre (C) ;
un cylindre interne (44) couplé de manière coulissante au cylindre externe ;
un tuyau (46, 56) d'insertion de fluide qui s'étend dans la chambre pour introduire du liquide hydraulique et du gaz dans la chambre ; et une valve (48) pour fermer le tuyau d'insertion de fluide afin de retenir le liquide hydraulique et le gaz à l'intérieur de la chambre,
**caractérisée en ce que** le tuyau (46) d'insertion de fluide comprend un tube extensible axialement et un actionneur dépendant de la température agencé pour modifier la longueur axiale du tube sur la base de la température à l'intérieur de la chambre, dans laquelle l'actionneur est agencé pour raccourcir le tube lorsque la température à l'intérieur de la chambre augmente et l'actionneur est agencé pour allonger le tube lorsque la température à l'intérieur de la chambre diminue.

2. Jambe d'amortisseur de chocs de train d'atterrissage d'aéronef selon la revendication 1, dans laquelle l'actionneur comprend un ou plusieurs éléments bimétalliques, chaque élément bimétallique comprenant une première couche de métal présentant un premier coefficient de dilatation thermique et une deuxième couche de métal présentant un deuxième coefficient de dilatation thermique qui est différent du premier coefficient de dilatation thermique, dans laquelle les première et deuxième couches de métal sont agencées en parallèle.

3. Jambe d'amortisseur de chocs de train d'atterrissage d'aéronef selon la revendication 2, dans laquelle le ou chaque élément bimétallique est agencé pour étendre le tube entre 0,1 mm/°C et 1,6 mm/°C.

4. Jambe d'amortisseur de chocs de train d'atterrissage d'aéronef selon la revendication 3, dans laquelle la première couche comprend de l'acier et la deuxième couche comprend du laiton.

5. Jambe d'amortisseur de chocs de train d'atterrissage d'aéronef selon une quelconque revendication précédente, dans laquelle le tube est distinct de l'actionneur.

6. Jambe d'amortisseur de chocs de train d'atterrissage d'aéronef selon la revendication 5, dans laquelle le tube est élastiquement déformable, et l'actionneur est disposé autour du tube.

7. Jambe d'amortisseur de chocs de train d'atterrissage d'aéronef selon la revendication 6, dans laquelle le tube inclut une bride radiale faisant saillie vers l'extérieur et l'actionneur présente une première extrémité couplée à une face axiale interne du cylindre externe et une deuxième extrémité couplée à la bride radiale.

8. Jambe d'amortisseur de chocs de train d'atterrissage d'aéronef selon une quelconque revendication précédente, dans laquelle l'actionneur comprend une ou plusieurs bandes hélicoïdales.

9. Jambe d'amortisseur de chocs de train d'atterrissage d'aéronef selon la revendication 8, dans laquelle l'actionneur comprend une pluralité de bandes hélicoïdales agencées dans un agencement équiangulaire autour du tube.

10. Jambe d'amortisseur de chocs de train d'atterrissage d'aéronef selon la revendication 5, dans laquelle le tube comprend un tube interne couplé à une face axiale interne du cylindre externe et un tube externe couplé de manière coulissante au tube interne pour un mouvement axial par rapport au tube interne et l'actionneur est agencé pour déplacer le tube externe pour allonger et raccourcir le tube.

11. Jambe d'amortisseur de chocs de train d'atterrissage d'aéronef selon la revendication 10, dans laquelle le tube interne inclut une portion filetée tournée vers l'extérieur et l'actionneur comprend en outre une bague rotative avec une portion filetée tournée vers l'intérieur agencée en prise avec la portion filetée tournée vers l'extérieur, la bague étant couplée mécaniquement au tube externe par une bride radiale s'étendant vers l'intérieur qui est reçue à l'intérieur d'une rainure circonférentielle sur la paroi latérale externe du tube externe pour permettre une rotation relative entre la bague et le tube externe mais inhiber un mouvement axial relatif entre la bague et le tube externe, dans laquelle l'actionneur comprend en outre une bande en spirale disposée autour de la bague et présentant une extrémité couplée à la bague et une extrémité couplée à une surface interne du cylindre externe de telle sorte qu'une contraction ou une expansion de la spirale due à un changement de température provoque une rotation de la bague pour déplacer le tube externe afin d'allonger ou de raccourcir le tube.

12. Jambe d'amortisseur de chocs de train d'atterrissage d'aéronef selon la revendication 10, dans laquelle l'actionneur comprend une pluralité d'éléments en bande agencés en parallèle, chaque élément en bande présentant une extrémité couplée au tube externe et une autre extrémité couplée à une surface interne du cylindre externe.

13. Jambe d'amortisseur de chocs de train d'atterrissage d'aéronef selon la revendication 10, dans laquelle l'actionneur comprend une pluralité de disques agencés dans un empilement en série, chaque disque incluant une ouverture centrale dans laquelle le tube est disposé, l'empilement de disques étant couplé au niveau d'une extrémité à une face axiale de face interne du cylindre externe et couplé au niveau de l'autre extrémité au tube externe ; ou dans laquelle l'actionneur comprend une pluralité de ressorts ondulés agencés dans un empilement en série définissant un anneau dans lequel le tube est disposé, l'anneau étant couplé au niveau d'une extrémité à une face axiale de face interne du cylindre externe et couplé au niveau de l'autre extrémité au tube externe.

14. Ensemble train d'atterrissage d'aéronef comprenant :
un palier pour coupler l'ensemble train d'atterrissage à un aéronef ;
un ensemble de contact avec le sol ; et
la jambe d'amortisseur de chocs selon une quelconque revendication précédente couplée au palier et à l'ensemble de contact avec le sol de telle sorte que, lorsque l'ensemble de contact avec le sol est en contact avec le sol, la jambe supporte le poids de l'aéronef.

15. Aéronef incluant un ou plusieurs ensembles train d'atterrissage d'aéronef selon la revendication 14.
